# EUROPEAN PATENT SPECIFICATION

(11) **EP 3 085 472 B1**
(45) Date of publication and mention of the grant of the patent: **20.12.2023**
(21) Application number: 14870982.7
(22) Date of filing: 25.11.2014
(51) Int. Cl.: B22F 3/15, F01D 5/34, B22F 5/00, B22F 3/24, B22F 10/25, B22F 10/62, B22F 10/64, B22F 10/66

(54) **METHOD OF MANUFACTURING A TURBINE BLISK THROUGH HOT ISOSTATIC PRESSING USING A METAL CORE**
VERFAHREN ZUR HERSTELLUNG VON TURBINEN-BLISK DURCH ISOSTATISCHES HEISSPRESSEN UNTER VERWENDUNG EINES METALLKERNS
PROCÉDÉ DE FABRICATION DE PIÈCES DE DISQUE DE TURBINE PAR PRESSAGE ISOSTATIQUE À CHAUD UTILISANT UN NOYEAU EN MÉTAL

(30) Priority: 18.12.2013 KR 20130157821
(43) Date of publication of application: 26.10.2016
(73) Proprietor: Korea Aerospace Research Institute, Daejeon 305-806 (KR)
(72) Inventor: YOON, Suk-Hwan, Yuseong-gu, Daejeon 34070 (KR); KIM, Jin Han, Sejong-si 30130 (KR)
(74) Representative: dompatent von Kreisler Selting Werner - Partnerschaft von Patent- und Rechtsanwälten mbB
(86) International application number: PCT/KR2014/011346
(87) International publication number: WO 2015/093740

(56) References cited:
- JP-A- 2003 191 046
- KR-A- 19990 083 652
- KR-A- 20040 083 581
- KR-A- 20070 091 274
- US-A- 6 042 780
- US-A1- 2008 115 358
- US-B1- 6 210 633
- LIU J H ET AL: "Manufacturing near dense metal parts via indirect selective laser sintering combined with isostatic pressing", APPLIED PHYSICS A; MATERIALS SCIENCE & PROCESSING, SPRINGER, BERLIN, DE, vol. 89, no. 3, 28 June 2007 (2007-06-28), pages 743-748, XP019540466, ISSN: 1432-0630, DOI: 10.1007/S00339-007-4159-6

## Description

### Technical Field

The present invention relates to a method of manufacturing a turbo blisk through hot isostatic pressing using a metal core. More specifically, the present invention relates to a method of manufacturing a turbine blisk through hot isostatic pressing using a metal core manufactured through additive manufacturing.

### Background Art

Generally, a turbine blisk for driving a turbo pump of an engine of a liquid rocket includes a turbine disk, blades, and a shroud.

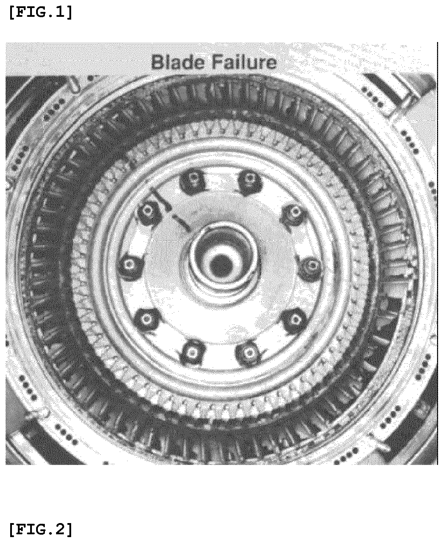

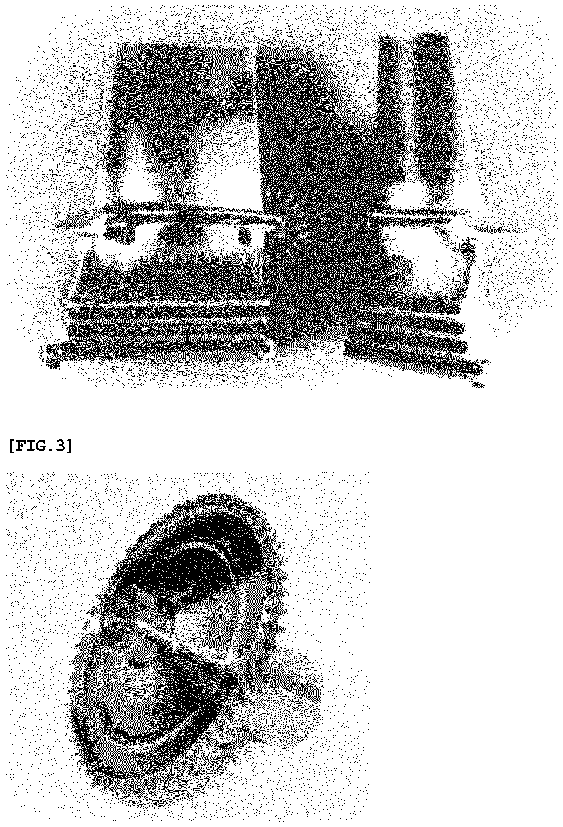

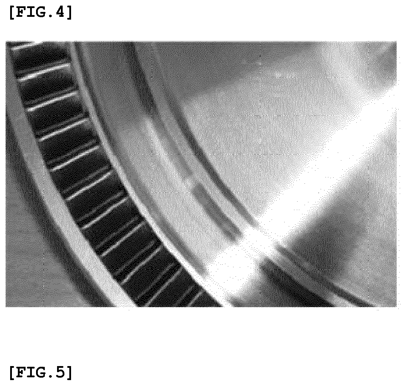

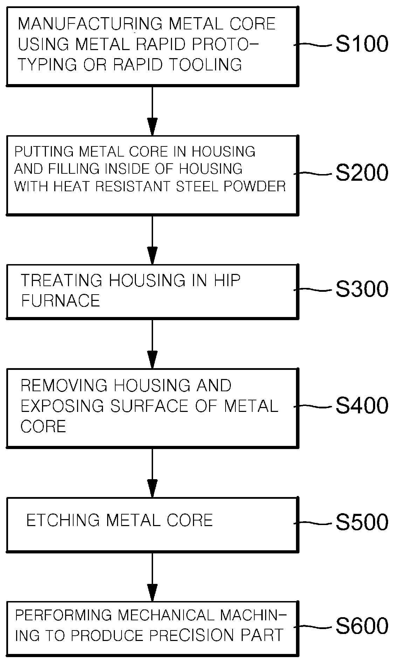

FIG. 1 is a picture illustrating a disk-blade assembly; FIG. 2 is a picture illustrating the shape of a conventional individual blade; FIG. 3 is a picture illustrating a processed disk integrated with blades; and FIG. 4 is a picture illustrating a state in which a shroud is disposed at the brim of a disk. A description will be made below with reference to FIGS. 1 and 4.

Conventionally, blades (including a shroud) and a disk are separately processed from each other and then the blades are later integrated with the disk.

This method allows that a disk and blades are made of different materials. However, this method poses problems such as vibration of individual blades, fatigue of the structure of inserted portions of blades, and high cost.

Alternatively, there is another conventional blisk manufacturing method. That is, blades are first manufactured through either electric-discharge processing or mechanical machining, a shroud is then manufactured, and the shroud is finally joined to the blades through welding or the like.

This method has an advantage in that an assembly of a disk, blades, and a shroud is considered a single integrated body that is structurally stable, but also has a disadvantage in that a joining process for joining the shroud to the blades is complicated and the integrated structure is not always free from joint failure.

There is a further conventional blisk manufacturing method. That is, a disk, blades, and a shroud are integrally processed at one time by subjecting a side surface of a disk to electric-discharge processing.

This method produces the most desirable structure because a disk, blades, and a shroud are genuinely integrated as a single piece. However, the structure and arrangement of electrodes and instruments for electric-discharging are complicated and expensive. Further, electrical discharge machining causes a recast layer to form on the machined surface of the workpiece, and the recast layer deteriorates fatigue lifetime of the machined structure.

Accordingly, the recast layer formed on the surface of a machined blade is likely to deteriorate the structural stability of a turbine.

US 6,042,780 refers to a method for producing high performance components by the consolidation of powdered materials under conditions of high isostatic pressure. The method uses the inclusion of reactive materials mixed into pressure-transmitting mold materials and into the powder to be consolidated to contribute to in-situ materials modification including purification, chemical transformation, and reinforcement. The method further uses encapsulation of the mold in a sealed container to retain the mold material in position and exclude air and contaminants.

US 6,210,633 offers a method of manufacturing articles of a complex shape by subjecting powder material to hot isostatic pressing. The method involves manufacturing a capsule with at least one insert, the capsule being filled with outgassed powder and being subjected to hot isostatic pressing.

US 2008/0115358 discloses a method of forming a rotationally mounted rotor component having at least one internal void space therein comprising the steps of forming a mold having an integral cross-section shape that is substantially identical to that of the rotor component, positioning a core insert within the mold, the core insert having a cross-section shape that is substantially identical to at least one internal void space; coating the core insert with a diffusion barrier; filling the mold with a superalloy material powder; hot-isostatic pressing the mold and the powder to consolidate the powder about the core insert and for a superalloy structure; removing the mold from the superalloy structure; removing the core insert from the superalloy structure, thereby defining the at least one internal void within the rotor component.

### Disclosure

### Technical Problem

Accordingly, the present invention has been made keeping in mind the above problems occurring in the prior art, and an object of the present invention is to provide a method of manufacturing a turbo blisk through hot isostatic press processing (HIP) using a metal core manufactured through metal rapid prototyping, the turbine blisk having a relatively complex structure.

### Technical Solution

In order to accomplish the above objects, according to one aspect, there is provided a method of manufacturing as defined in claim, in particular a method of manufacturing a turbo blisk through hot isostatic press processing using a metal core manufactured through metal rapid prototyping, the method including:
a first step of manufacturing the metal core made of low carbon steel in which an internal vacant space having the same shape as the turbo blisk is formed, using additive manufacturing;
a second step of putting the metal core in a housing, filling the internal vacant space of the metal core and an inside of the housing with nickel alloy powder, and creating a vacuum state in the housing;
a third step of treating the housing at a temperature of 1000 °C or higher and under a pressure of 10⁸ Pa (1000 bar) or higher in a hot isostatic press (HIP) furnace to produce a nickel alloy;
a fourth step of removing the housing and removing a portion of the nickel alloy through mechanical machining to expose one surface of the metal core;
a fifth step of dipping the nickel alloy, which one surface of the metal core is exposed, in a nitric acid-based etching solution to remove the metal core; and
a sixth step of removing a portion of the nickel alloy from which the metal core is removed, through mechanical machining, in which the remaining portion of the nickel alloy corresponds to the shape of the turbo blisk.

### Advantageous Effects

The manufacture of a metal core using a metal rapid prototyping method is based on the idea of stacking layers, but not based on the idea of conventional machining. Therefore, even turbo blisks, i.e. parts with a very complicated shape can be manufactured to be a single piece according to the present invention.

Furthermore, an article manufactured using a metal rapid prototyping method typically suffers internal flaws attributable to micro-melting and stacking, residual stress distribution, deformation, and the like. Therefore, such an article is limitedly applied, by way of experiment, to the aerospace field which requires high reliability. However, according to the present invention, since a core manufactured using a metal rapid prototyping method is removed and only a mold produced through an HIP process, which is a mature and stable process, is left for use, those problems can be solved.

### Description of Drawings

FIG. 1 is a picture illustrating a blade-disk assembly according to a conventional art;
FIG. 2 is a picture illustrating the shape of an individual blade according to a conventional art;
FIG. 3 is a picture illustrating a state in which a disk is machined to be equipped with blades;
FIG. 4 is a picture illustrating a state in which a shroud is joined to the outer circumference of a disk;
FIG. 5 is a flowchart illustrating a method of manufacturing a metal core using a metal rapid prototyping method and a method of manufacturing precision parts through a hot isostatic press process using the metal core;
FIG. 6 is a schematic diagram illustrating a precision part (the shape of a turbine) to be manufactured according to one embodiment of the present invention;
FIG. 7 is a schematic diagram illustrating a metal core that has an internal vacant space therein having the same shape as a precision part to be manufactured according to one embodiment of the present invention;
FIG. 8 is a picture illustrating a process of manufacturing a metal core using a metal rapid prototyping method according to one embodiment of the present invention;
FIG. 9 is a schematic diagram illustrating a state in which a metal core is put in a housing, the inside of the housing is filled with heat resistant steel powder, and a vacuum state is created in the housing, according to one embodiment of the present invention;
FIG. 10 is a schematic diagram illustrating a state in which the housing of FIG. 8 is treated under high pressure and temperature in an HIP furnace according to one embodiment of the present invention;
FIG. 11 is a schematic diagram illustrating a state in which the housing is removed after the HIP process is finished;
FIG. 12 is a schematic diagram illustrating a state in which one side of the heat resistant steel is mechanically machined to be removed, exposing one surface of the metal core, according to one embodiment of the present invention;
FIG. 13 is a schematic diagram illustrating a state in which the metal core of FIG. 11 is dipped in an etching solution so that the metal core can be removed; and
FIG. 14 is a picture illustrating a precision part manufactured according to the method according to one embodiment of the present invention.

### Best Mode

Reference will now be made in detail to various embodiments of the present invention, specific examples of which are illustrated in the accompanying drawings and described below.

Throughout the drawings, the same reference numerals will refer to the same or like parts.

It will be understood that, although the terms "first", "second", etc. may be used herein to describe various elements, these elements should not be limited by these terms.

These terms are only used to distinguish one element from another element. For instance, a first element discussed below could be termed a second element without departing from the teachings of the present invention. Similarly, the second element could also be termed the first element. The term "and/or" specifies the presence of any one of stated elements or combinations of them.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Other expressions that explain the relationship between elements, such as "between", "directly between", "adjacent to", or "directly adjacent to" should be construed in the same way.

The terminology used herein is for the purpose of describing particular embodiments only and is not intended to be limiting. As used herein, the singular forms "a", "an", and "the" are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinbelow, exemplary embodiments of the present invention will be described in detail with reference to the accompanying drawings.

FIG. 5 is a flowchart illustrating a method of manufacturing a metal core using a metal rapid prototyping method and a method of manufacturing precision parts through hot isostatic pressing using the metal core, according to one embodiment of the present invention. The methods will be described below with reference to FIG. 5.

The method of manufacturing a metal core using a metal rapid prototyping method and the method of manufacturing a turbine blisk through hot isostatic pressing using the metal core, according to one embodiment of the present invention, includes: a first step S100 of preparing a metal core 200 having an internal vacant space that is the same as the shape of a precision part 100 to be manufactured, using a metal rapid prototyping method; a second step S200 of putting the metal core 200 in a housing 300, filling the internal vacant space of the metal core 200 and the inside of the housing 300 with nickel alloy powder, and creating a vacuum state in the housing 300; a third step S300 of manufacturing a nickel alloy 600 by treating the housing 300 under high temperature and pressure in a hot isostatic press (HIP) furnace 500; a fourth step S400 of removing the housing 300 and partially removing the nickel alloy 600 to expose one surface of the metal core 200; a fifth step S500 of etching the metal core 200 to remove the metal core 200; and a sixth step S600 of partially removing the nickel alloy 600, from which the metal core 200 is removed, through mechanical machining to leave only a portion of the nickel alloy 600, which corresponds to the shape of the precision part 110.

### 1) First Step S100

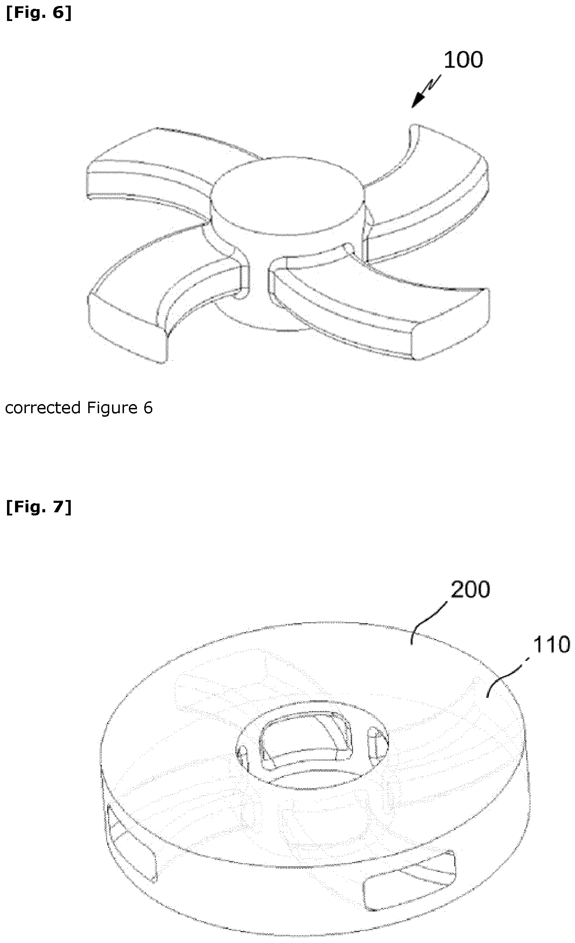

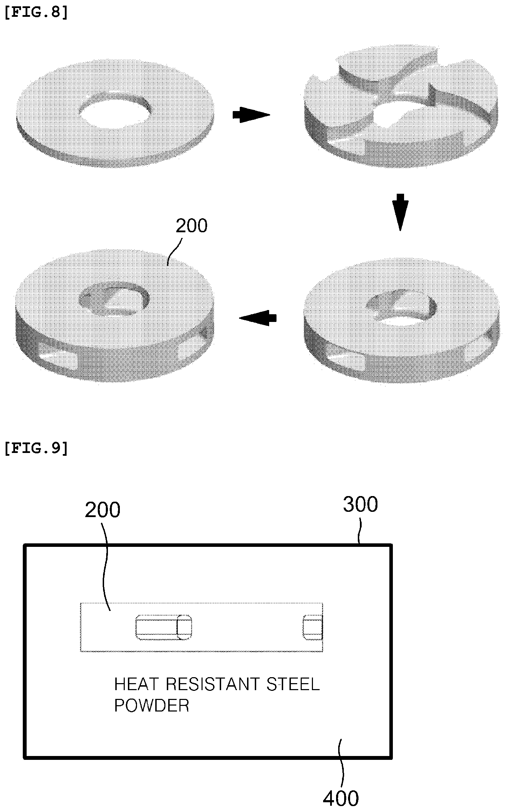

FIG. 6 is a schematic diagram illustrating the precision part , turbine blisk, 100 to be manufactured using the present invention, FIG. 7 is a schematic diagram illustrating the metal core 200 having an internal vacant space having the same shape as the precision part 100, and FIG. 8 is a schematic diagram illustrating the flow of processes in the method of manufacturing the metal core 200 using a metal rapid prototyping method according to the present invention.

The manufacturing method will be described below with reference to FIGS. 6 to 8.

FIG. 6 illustrates a schematic diagram illustrating the shape of a turbine blisk to be manufactured according to the present invention. The metal core 200 made of low carbon steel is first prepared as illustrated in FIG. 7.

Since it is difficult with an existing mechanical machining technology to machine low carbon steel to produce the metal core 200, the metal core 200 is prepared using a metal rapid prototyping method.

As illustrated in FIG. 8, the metal rapid prototyping includes: a step of creating a cross-section data file for each unit height by slicing a three-dimension model of an object to be prepared; and a step of melting metal (low carbon steel) with a laser and dripping the molten metal according to the shape of each cross-section for each unit height; or a step of stacking metal powder, layer by layer, to produce the metal core 200.

### 2) Second Step S200

FIG. 9 is a schematic diagram illustrating a state in which the metal core 200 is put in the housing 300 according to one embodiment of the present invention, the inside of the housing 300 is filled with nickel alloy powder 400, and a vacuum state is created in the housing 300. This process will be described in more detail below.

The housing 300 is made of a thin metal plate and takes the form of a can. Next, the metal core 200 manufactured using a metal rapid prototyping method is put into the housing 300. The inside of the metal core 200, including a portion corresponding to the shape 110 of the precision part, as well as the inside of the housing 300 is filled with nickel alloy powder 400 and air in the housing 300 is purged to create a vacuum state in the housing 300. Next, the inside of the housing 300 is sealed.

A turbine blisk is manufactured with the nickel-based alloy powder 400, which is preferably Inconel 718.

### 3) Third Step S300

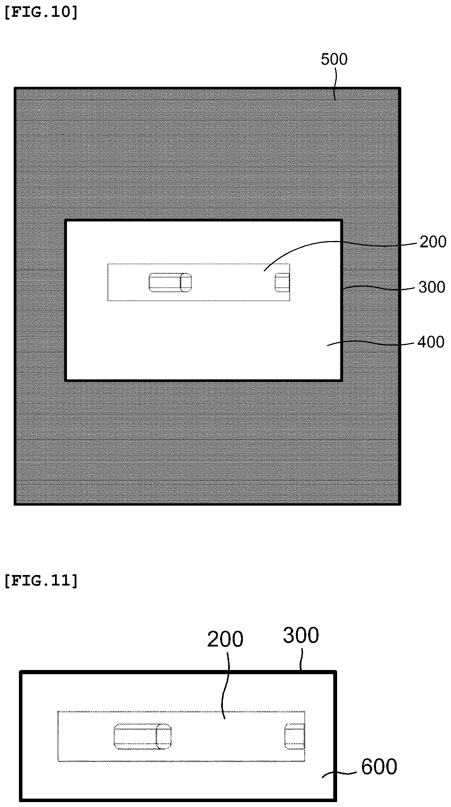

FIG. 10 is a schematic diagram illustrating a state in which the housing 300 of FIG. 8 is treated under high temperature and pressure in a hot isostatic press (HIP) furnace 500 according to the present invention. FIG. 11 is a schematic diagram illustrating a state in which the housing 300 is removed after the HIP process is finished. This step will be more specifically described below with reference to FIGS. 10 and 11.

As illustrated in FIG. 10, the nickel alloy powder 400 is pressed in the housing 300 through hot isostatic pressing (HIP), air in the housing 300 is drawn to create a vacuum state in the housing 300, and the inside of the housing 300 is sealed. Next, the housing 300 is treated for several hours under 10⁸ Pa (1000 bar) or higher and at a temperature of 1000 °C or higher to produce a solid object with a density of 100%.

Hot isostatic pressing (HIP) has an advantage of being able to produce a solid object without being limited by properties of a raw material. Therefore, a solid object substantially similar to the final target shape is first manufactured through HIP, thereby minimizing the amount of mechanical machining.

To form an empty space between blades, the metal core 200 is preliminarily inserted into the nickel alloy powder 400 and then an HIP process is performed.

As illustrated in FIG. 11, after the HIP process is finished, the housing 300 is removed. Since the nickel alloy powder 400 is sintered to have a density of 100%, its volume is reduced and the nickel alloy 600 is thus produced. On the other hand, since the metal core 200 is originally solid, its volume is not reduced so that the metal core 200 is disposed inside the nickel alloy 600 as it is.

Since the HIP process is a known technology, a detailed description thereabout will not be given herein below.

### 4) Fourth Step S400

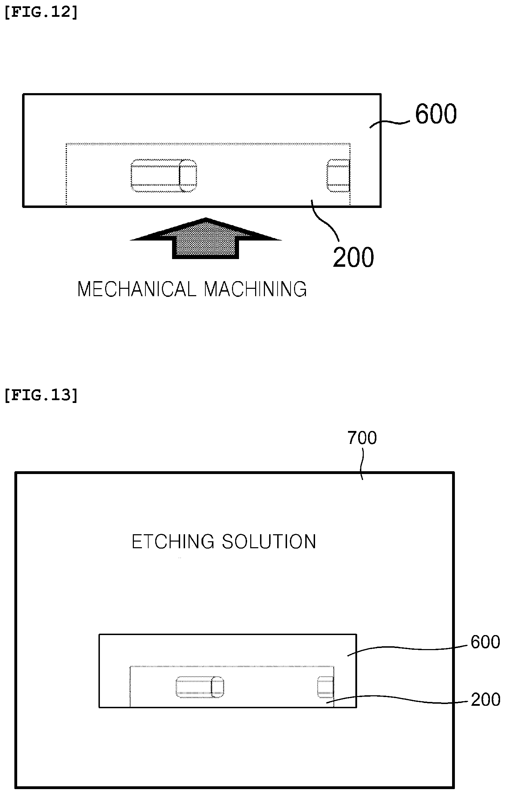

FIG. 12 is a schematic diagram illustrating a state in which one side of the nickel alloy 600 according to the present invention is removed through mechanical machining to expose one surface of the metal core 200. This process will be more specifically described below.

An outer shell of the housing 300 is typically made of stainless steel. Therefore, it is removed through mechanical machining so that the surface of the metal core 200 made of low carbon steel is exposed. To this end, as illustrated in FIG. 12, one side of the nickel alloy 600 is removed through mechanical machining.

There are various methods for mechanical machining, which are known very well. Accordingly, a detailed description thereabout will not be given herein.

### 5) Fifth Step S500

FIG. 13 is a schematic diagram illustrating a state in which the metal core 200 of FIG. 11 is dipped in an etching solution to be removed. This process will be more specifically described below.

The metal core 200 made of low carbon steel, whose one surface is exposed, is dipped in an etching solution 700. The etching solution 700 may be a nitric acid-based solution.

The nickel alloy 600 is used as a material for a turbine. Accordingly, the nickel alloy 600 is highly anti-corrosive, but low carbon steel that is used as a material for the metal core 200 is corrosive. By using this corrosiveness difference, it is possible to selectively etch only the metal core 200 made of low carbon steel.

It is possible to easily remove the metal core 200 made of low carbon steel with use of the nitric acid-based etching solution 700.

### 6) Sixth Step S600

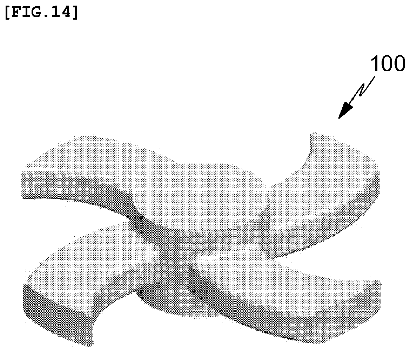

FIG. 14 is a diagram illustrating a precision part 100 manufactured according to the manufacturing method according to the present invention. A description thereabout will be described below with reference to FIG. 14.

After the etching process is finished, unnecessary portions other than a portion corresponding to the precision part 100 , turbine blisk, are removed through mechanical machining and then a finishing process is performed. Through this process, as illustrated in FIG. 14, a turbine blisk can be formed using HIP and the nickel alloy powder 400.

When the metal core 200 has a simple shape, it can be manufactured through mechanical machining. However, when a metal core has a complex structure like the metal core 200 used to prepare a turbine blisk, the metal core is manufactured using a direct metal rapid prototyping method as in the present invention.

Among rapid prototyping methods that are being currently widely spread, by using a direct metal rapid prototyping method using metal powder, it is possible to easily manufacture the metal core 200 having a complex structure.

Conventionally, there is a method of using a ceramic core in which an internal vacant space having the same shape as a target object is formed in an HIP process. However, since a ceramic core and a metal core largely differ in thermal expansion coefficient, residual stress occurs in a metal at the time of cooling the metal after the HIP process is finished, which is highly likely to cause cracks in metal.

In addition, some documents present a conventional method of using a metal core instead of a ceramic core but the conventional method relates only to formation of a blade that can be easily formed through mechanical machining.

The technical object of the present invention is to prepare the metal core 200 used to manufacture a turbine blisk having a complex structure, using a metal rapid prototyping method.

### <Description of the Reference Numerals in the Drawings>

| | | | |
|---|---|---|---|
| 100: | precision part , turbine blisk | | |
| 110: | shape of precision part | | |
| 200: | metal core | 300: | housing |
| 400: | nickel alloy powder | | |
| 500: | HIP furnace | 600: | nickel alloy |
| 700: | etching solution | S100: | first step |
| S200: | second step | S300: | third step |
| S400: | fourth step | S500: | fifth step |
| S600: | sixth step | | |
| S600: | sixth step | | |

## Claims

1. A method of manufacturing a turbo blisk through hot isostatic pressing using a metal core (200) manufactured through additive manufacturing, the method comprising:
a first step (S100) of manufacturing the metal core (200) made of low carbon steel in which an internal vacant space having the same shape as the turbo blisk is formed, using additive manufacturing;
a second step (S200)of putting the metal core (200) in a housing (300), filling the internal vacant space of the metal core (200) and an inside of the housing (300) with nickel alloy powder (400), and creating a vacuum state in the housing (300);
a third step (S300) of treating the housing (300) at a temperature of 1000 °C or higher and under a pressure of 10⁸ Pa (1000 bar) or higher in a hot isostatic press (HIP) furnace to produce a nickel alloy (600);
a fourth step (S400) of removing the housing (300) and removing a portion of the nickel alloy (600) through mechanical machining to expose one surface of the metal core (200);
a fifth step (S500) of dipping the nickel alloy (600), J which one surface of the metal core (200) is exposed, in a nitric acid-based etching solution (700) to remove the metal core (200); and
a sixth step (S600)of removing a portion of the nickel alloy (600) from which the metal core (200) is removed, through mechanical machining, in which the remaining portion of the nickel alloy (600) corresponds to the shape (110) of the turbo blisk.

## Patentansprüche

1. Verfahren zur Herstellung eines Turbo-Blisk durch heißisostatisches Pressen unter Verwendung eines Metallkerns (200), der durch additive Fertigung hergestellt ist, wobei das Verfahren umfasst:
einen ersten Schritt (S100) des Herstellens des Metallkerns (200), der aus Schmiedeeisen besteht, wobei ein innerer Hohlraum mit derselben Form wie das Turbo-Blisk entsteht, wobei additive Fertigung verwendet wird;
einen zweiten Schritt (S200) des Verbringens des Metallkerns (200) in ein Gehäuse (300), des Füllens des inneren Hohlraums des Metallkerns (200) und des Innern des Gehäuses (300) mit Nickellegierungspulver (400) und des Schaffens eines Vakuumzustands in dem Gehäuse (300);
einen dritten Schritt (S300) des Behandelns des Gehäuses (300) bei einer Temperatur von 1000°C oder höher und unter einem Druck von 10⁸ Pa (1000 bar) oder höher in einem heißisostatischen Press(HIP)-Ofen, wobei eine Nickellegierung (600) entsteht;
einen vierten Schritt (S400) des Entfernens des Gehäuses (300) und des Entfernens eines Teils der Nickellegierung (600) durch mechanische spanende Bearbeitung, wobei eine Fläche des Metallkorns (200) freigelegt wird;
einen fünften Schritt (S500) des Eintauchens der Nickellegierung (600), wobei eine Fläche des Metallkorns (200) freigelegt ist, in eine Ätzlösung auf Salpetersäurebasis (700), wobei der Metallkern (200) entfernt wird; und
einen sechsten Schritt (S600) des Entfernens eines Teils der Nickellegierung (600), von der der Metallkern (200) entfernt ist, durch mechanische spanende Bearbeitung, wobei der restliche Teil der Nickellegierung (600) der Form (110) des Turbo-Blisk entspricht.

## Revendications

1. Procédé pour fabriquer un blisk (rotor à aubes intégrées) de turbine par pressage isostatique à chaud en utilisant un noyau métallique (200) fabriqué par fabrication additive, ledit procédé comprenant :
une première étape (S100) consistant à fabriquer le noyau métallique (200) en acier à faible teneur en carbone, dans lequel un espace vide interne ayant la même forme que ledit blisk de turbine est formé, en utilisant la fabrication additive,
une deuxième étape (S200) consistant à placer le noyau métallique (200) dans un boîtier (300), remplir ledit espace vide interne du noyau métallique (200) et un intérieur dudit boîtier (300) avec une poudre d'alliage de nickel (400), et créer un état de vide dans le boîtier (300),
une troisième étape (S300) consistant à traiter le boîtier (300) à une température de 1000°C ou supérieure et sous une pression de 10⁸ Pa (1000 bar) ou supérieure dans un fourneau à pressage isostatique à chaud (PIC) pour produire un alliage de nickel (600),
une quatrième étape (S400) consistant à éliminer le boîtier (300) et éliminer une partie de l'alliage de nickel (600) par usinage mécanique pour exposer une surface du noyau métallique (200),
une cinquième étape (S500) consistant à tremper l'alliage de nickel (600), où une surface du noyau métallique (200) est exposée, dans une solution de gravure à base d'acide nitrique (700) pour éliminer le noyau métallique (200), et
une sixième étape (S600) consistant à éliminer une partie de l'alliage de nickel (600) dont le noyau métallique (200) a été éliminé par usinage mécanique, dans lequel la partie restante de l'alliage de nickel (600) correspond à la forme (110) du blisk de turbine.
